# EUROPEAN PATENT APPLICATION

(11) **EP 1 352 568 A1**
(43) Date of publication of application: **15.10.2003**
(21) Application number: 01938270.4
(22) Date of filing: 05.06.2001
(51) Int. Cl.: A23L 1/18

(54) **METHOD FOR MICROWAVING PREVIOUSLY PACKED COLORED POPCORN**

(30) Priority: 09.10.2000 ES 200002437
(71) Applicant: Borges, S.A., E-43205 Reus (ES)
(72) Inventor: DURAN VILA, Juan Ramón, E-43205 Reus (Tarragona) (ES); GOMEZ ARROYO, Fátima, E-43205 Reus (Tarragona) (ES)
(74) Representative: Diaz de Bustamante y Terminel, Isidro
(86) International application number: ES0100230
(87) International publication number: WO02030218

(57) **Abstract**

Procedure for the preparation of pre-packaged coloured popcorn in the microwave oven. The following ingredients are used basically: coloured corn for popcorn and sugar or fine, table salt, the product being suitable for cooking in a microwave oven and packaged beforehand in a microwave-resistant paper bag with an inner aluminium lining. Aromas shall also be used, on an optional basis. According to the procedure, corn is measured out in the proportion of 70% of the total weight of the product to be packaged. Then the other ingredients, representing 30% of the indicated weight, are added, these latter having been prepared homogeneously beforehand at a controlled temperature of 50-55°C, and the resultant mixture is poured tidily into the paper bag.

## Description

More specifically, the aim of this procedure is a product based on coloured corn for popcorn designed for subsequent cooking in a microwave oven.

This new food product makes it possible to obtain popcorn in one or more colours and with one or more flavours, this product being totally suitable for human consumption, and it is sold in an absolutely clean container.

The aims of this food product are:
a) A "colourful" food product that is suitable for human consumption.
   This product is obtained with the same ease of cooking (on the part of the consumer) as that for the well-known salted popcorn for microwave ovens.
b) A product that is appealing to the eye.
   Used in the process for obtaining it is coloured corn, or a mixture of different, highly coloured corn, pleasing to the eye, and whose colour does not disappear or diminish under the effects of heat or when the corn expands and bursts. In addition, the colour must not become separated from the corn, thereby avoiding it being scattered over the inside of the container and becoming mixed with other colours, since otherwise it would be impossible to obtain different-coloured popcorn within the same package.
C) The possibility that the product may be obtained with different variable combinations of additives.

The different ingredients used must permit the feasibility of being able to obtain different flavours in the final food product, without any ingredient altering the properties of another. What must be used is a coloured corn for popcorn that permits flexibility in the combination of the rest of the ingredients in a totally free way and makes it possible to define different variables of the final product, for example sweet or salty popcorn, with or without flavours, in one or several colours, all in the same package, etc.

The following ingredients shall be used in the preparation of this new food product: coloured corn for popcorn, hydrogenated vegetable fat, sugar or fine, table salt and the optional use of aromas (according to the desired flavour) which must be liposoluble and resistant to the conditions occurring inside a microwave oven.

In addition, it is essential to use for the containment of this product a bag made from special paper for use in microwave ovens (for example, the Kraft type) which is resistant to high temperatures and impermeable to liquids and fats. The format of the bag shall have a fold or "bellows"-like feature that will open up when the bag swells as a result of the build-up of steam pressure accumulating inside it. This bag has an inner aluminium lining that helps keep uniformity of the heat generated when cooking the product.

The procedure for preparing this new product has the special feature that an amount of coloured corn for popcorn is measured out in the proportion of 70% of the weight of the contents of the product to be packaged; next, the rest of the ingredients are measured out (fat, salt or sugar and optionally aromas) in the proportion of 30% of the weight indicated, these latter having been prepared beforehand with homogeneous mixing at a controlled temperature of 50 to 55°C.

The resulting mixture of all the ingredients is then poured tidily into the bag which will then have the appropriate folds made in it. Commercially, the bag will be sold inside a plastic wrapper.

Within the scope of its essential nature, the invention can be put into practice using other methods that only differ in detail from the process described by way of example, such methods achieving equally the protection claimed. And so, this food product can be obtained with the most suitable ingredients and processes since all this is included in the section marked "Claims".

## Claims

1. Procedure for the preparation of a food product, with the special feature that basically, the following ingredients are used: coloured corn for popcorn, hydrogenated vegetable fat and sugar or fine, table salt, the product being suitable for cooking in a microwave oven once it has been packaged in a bag made of paper that is microwave-resistant.

2. Procedure for the preparation of a food product, in accordance with claim 1, with the special feature that aroma is also used as an ingredient.

3. Procedure for the preparation of a food product in accordance with the previous claims, with the special feature that first, an amount of corn representing 70% of the total weight of the product to be packaged is measured out; then, the mixture of the rest of the ingredients to make up the remaining 30% of the indicated weight is measured out, this latter having been prepared homogeneously beforehand at a controlled temperature of 50-55°C., and then the global mixture of all these ingredients is poured tidily into the paper bag.

4. Procedure for the preparation of a food product, in accordance with claim 1, with the special feature that the bag is impermeable to liquids and fats and has an aluminium inner lining that helps maintain uniformity of the heat generated during the cooking process.
